# EUROPEAN PATENT APPLICATION

(11) **EP 3 216 811 A1**
(43) Date of publication of application: **13.09.2017**
(21) Application number: 15857209.9
(22) Date of filing: 02.11.2015
(51) Int. Cl.: C08F 214/22, C08K 5/14, C08L 27/16, C09K 3/10, F16J 15/10, F16L 11/12

(54) **FLUORINE-CONTAINING ELASTOMER, FLUORINE-CONTAINING ELASTOMER COMPOSITION, AND FLUORINE-CONTAINING ELASTOMER CROSSLINKED ARTICLE**

(30) Priority: 07.11.2014 JP 2014226976
(71) Applicant: Asahi Glass Company, Limited, Tokyo 100-8405 (JP)
(72) Inventor: AIDA, Shigeru, Tokyo 100-8405 (JP); TAGUCHI, Daisuke, Tokyo 100-8405 (JP); YAGI, Keisuke, Tokyo 100-8405 (JP)
(74) Representative: Müller-Boré & Partner Patentanwälte PartG mbB
(86) International application number: PCT/JP2015/080951
(87) International publication number: WO 2016/072397

(57) **Abstract**

To provide a fluorinated elastomer from which it is possible to produce a crosslinked article excellent in cold resistance and excellent in mechanical strength; a fluorinated elastomer composition containing said elastomer; and a fluorinated elastomer crosslinked article obtained by molding and crosslinking said composition. The fluorinated elastomer comprises units (A) based on vinylidene fluoride and units (B) based on a perfluorovinyl ether represented by CF₂=CF-O-R^{f}, and has iodine atoms at main chain terminals, wherein the molar ratio [(A)/(B)] of units (A) to units (B) is from 88/12 to 50/50. In the formula, R^{f} is a C₁₋₂₀ perfluoroalkyl group having a branched structure, or a C₂₋₂₀ perfluoroalkyl group having a branched structure and also having an etheric oxygen atom between carbon atoms.

## Description

### TECHNICAL FIELD

The present invention relates to a fluorinated elastomer, a fluorinated elastomer composition, and a fluorinated elastomer crosslinked article.

### BACKGROUND ART

A fluorinated elastomer has characteristics capable of providing a crosslinked article excellent in heat resistance, chemical resistance, weather resistance, etc., and thus is used in various fields such as automobiles, industrial machines, OA equipment, electrical and electronic equipment, etc. For example, in the automotive field, its crosslinked article has been used as a hose for automotive fuel or a sealing material for automotive fuel. Further, as a fluorinated elastomer, one having a bromine group or an iodine group as a crosslinking moiety is known, from the viewpoint of easy progression of a crosslinking reaction.

A fluorinated elastomer has such excellent characteristics and thus has been used in a wide range of fields, but there has been a problem that the obtainable crosslinked article is insufficient in cold resistance.

Under such circumstances as the background, for example, Patent Document 1 discloses, as a fluorinated elastomer capable of providing a crosslinked article excellent in cold resistance, an elastomer comprising units based on vinylidene fluoride, units based on perfluoro(2-n-propoxy-propyl vinyl ether) having a branched structure and units based on perfluoro(2-bromoethyl vinyl ether) having a bromine group.

Patent Documents 2 and 3 disclose, as a fluorinated elastomer capable of providing a crosslinked article excellent in cold resistance, an elastomer comprising units based on vinylidene fluoride, units based on a perfluorovinyl ether having a linear structure, and a moiety derived from other monomer or compound having a bromine group or an iodine group.

### PRIOR ART DOCUMENTS

### PATENT DOCUMENTS

Patent Document 1: JP-A-57-109810
Patent Document 2: Japanese Patent No. 4,570,780
Patent Document 3: JP-A-2009-523877

### DISCLOSURE OF INVENTION

### TECHNICAL PROBLEM

However, crosslinked articles of the fluorinated elastomers disclosed in Patent Documents 1 to 3 were inadequate in mechanical strength, although excellent in cold resistance.

It is an object of the present invention to provide a fluorinated elastomer capable of producing a crosslinked article which is excellent in cold resistance and excellent in mechanical strength; a fluorinated elastomer composition containing such a fluorinated elastomer; and a fluorinated elastomer crosslinked article obtained by crosslinking and molding such a fluorinated elastomer composition.

### SOLUTION TO PROBLEM

The present invention has the following constructions.
[1] A fluorinated elastomer characterized by comprising units (A) based on vinylidene fluoride and units (B) based on a perfluorovinyl ether represented by the following formula (1) and having iodine atoms at main chain terminals, wherein the molar ratio [(A)/(B)] of the units (A) to the units (B) is from 88/12 to 50/50,

   CF₂=CF-O-R^{f} (1)

   wherein R^{f} is a C₁₋₂₀ perfluoroalkyl group having a branched structure, or a C₂₋₂₀ perfluoroalkyl group having a branched structure and having an etheric oxygen atom between carbon atoms.
[2] The fluorinated elastomer according to [1], which further contains units (C) based on a monomer other than the above vinylidene fluoride and the above perfluorovinyl ether.
[3] The fluorinated elastomer according to [2], wherein the content of the units (C) is from 1 to 50 mol% to all units.
[4] The fluorinated elastomer according to [2] or [3], wherein the units (C) are units based on tetrafluoroethylene.
[5] The fluorinated elastomer according to any one of [1] to [4], wherein the perfluorovinyl ether is perfluoro(2-n-propoxypropyl vinyl ether).
[6] The fluorinated elastomer according to any one of [1] to [5], wherein the fluorine content in the fluorinated elastomer is at least 65 mass%.
[7] The fluorinated elastomer according to any one of [1] to [6], wherein the content of iodine atoms at the main chain terminals is from 0.001 to 1.5 mass% to the fluorinated elastomer.
[8] The fluorinated elastomer according to any one of [1] to [7], wherein the glass transition temperature of the fluorinated elastomer is from -50 to 0°C.
[9] The fluorinated elastomer according to any one of [1] to [8], wherein the storage elastic modulus of the fluorinated elastomer is from 10 to 300 kPa.
[10] A fluorinated elastomer composition characterized by comprising the fluorinated elastomer as defined in any one of [1] to [9] and an organic peroxide, wherein the content of the organic peroxide is from 0.05 to 10 parts by mass per 100 parts by mass of the fluorinated elastomer.
[11] The fluorinated elastomer composition according to [10], which further contains a crosslinking assistant, wherein the content of the crosslinking assistant is from 0.1 to 10 parts by mass per 100 parts by mass of the fluorinated elastomer.
[12] A fluorinated elastomer crosslinked article formed by molding and crosslinking the fluorinated elastomer composition as defined in [10] or [11].
[13] The fluorinated elastomer crosslinked article according to [12], which is a hose for automobile fuel or a sealing material for automobile fuel.

### ADVANTAGEOUS EFFECTS OF THE INVENTION

According to the present invention, it is possible to provide a fluorinated elastomer capable of producing a crosslinked article excellent in cold resistance and excellent in mechanical strength, a fluorinated elastomer composition containing such a fluorinated elastomer, and a fluorinated elastomer crosslinked article obtained by crosslinking and molding such a fluorinated elastomer composition.

### DESCRIPTION OF EMBODIMENTS

In this specification, a "unit" means a moiety derived from a monomer, which is formed by polymerization of the monomer. A unit may be a unit formed directly by a polymerization reaction or may be a unit having part of a unit of a polymer converted to another structure by treating the polymer. A unit based on a monomer may simply be referred to also as a monomer unit.

A "monomer" means a compound having a polymerizable unsaturated bond, i.e. a polymerization reactive carbon-carbon double bond.

A "main chain" is meant for a moiety having the largest number of carbon atoms, among carbon chains formed by polymerization of a monomer.

A "side chain" is meant for a moiety which is bonded to the main chain formed by polymerization of the monomer.

### [Fluorinated elastomer]

The fluorinated elastomer of the present invention comprises units (A) based on vinylidene fluoride (hereinafter referred to also as "VDF") and units (B) based on a perfluorovinyl ether represented by the following formula (1) (hereinafter referred to also as "PAVE"), wherein the molar ratio [(A)/(B)] of units (A) to units (B) is from 88/12 to 50/50:

CF₂=CF-O-R^{f} (1)

wherein R^{f} is a C₁₋₂₀ perfluoroalkyl group having a branched structure, or a C₂₋₂₀ perfluoroalkyl group having a branched structure and having an etheric oxygen atom between carbon atoms. The number of etheric oxygen atoms is preferably from 1 to 3, more preferably 1. The number of carbon atoms in R^{f} is preferably from 3 to 20, more preferably from 3 to 8, particularly preferably from 3 to 6. When the number of carbon atoms in R^{f} is at least the lower limit value within the above range, a fluorinated elastomer crosslinked article obtainable by molding and crosslinking the fluorinated elastomer or a fluorinated elastomer composition containing the fluorinated elastomer, will have sufficient low temperature properties, and when the number of carbon atoms in R^{f} is at most the upper limit value within the above range, it will have sufficient mechanical strength.

When R^{f} in PAVE has a branched structure, a fluorinated elastomer containing units (B) based on such PAVE also has a branched structure in its side chain, whereby the fluorinated elastomer crosslinked article will be excellent in mechanical strength. This is considered to be such that as the fluorinated elastomer has a branched structure in its side chain, there will be such an effect that such side-chains tend to be more entangled one another, whereby the mechanical strength of the fluorinated elastomer crosslinked article will be improved.

Specific examples of PAVE may be CF₂=CF-O-CF₂CF(CF₃)₂, CF₂=CF-O-CF₂CF(CF₃)OCF₃, CF₂=CF-O-CF₂CF(CF₃)OCF₂CF₃, CF₂=CF-O-CF₂CF(CF₃)OCF₂CF₂CF₃, CF₂=CF-O-CF₂CF(CF₃)OCF₂CF₂OCF₃, CF₂=CF-O-CF₂CF(CF₃)OCF₂CF₂OCF₂CF₃, etc. Among these, from the viewpoint of excellent low-temperature properties and mechanical strength of the fluorinated elastomer crosslinked article, CF₂=CF-O-CF₂CF(CF₃)OCF₂CF₂CF₃ (perfluoro(2-n-propoxypropyl vinyl ether), hereinafter referred to also as "PHVE") is more preferred.

As PAVE, one type may be used alone, or two or more types may be used in combination.

When a fluorinated elastomer comprises units (A) and units (B), and the molar ratio [(A)/(B)] of the units (A) to the units (B) is in the above range, such a fluorinated elastomer tends to readily have a glass transition temperature (hereinafter referred to also as "Tg") of at most 0°C. It is thereby possible to obtain a fluorinated elastomer crosslinked article excellent in cold resistance. Further, the obtainable fluorinated elastomer crosslinked article will be excellent in rubber physical properties such as flexibility, elongation, mechanical strength, etc. Further, the storage elastic modulus G' which will be described later, tends to be within a practically suitable range.

The molar ratio [(A)/(B)] is more preferably from 88/12 to 65/35, particularly preferably from 86/14 to 75/25. When the molar ratio [(A)/(B)] is at most the upper limit value in the above range, the fluorinated elastomer will have substantially no crystallinity, and the obtainable fluorinated elastomer crosslinked article will be excellent in rubber physical properties. In addition, Tg tends to be at most 0°C. When the molar ratio [(A)/(B)] is at least the lower limit value in the above range, the obtainable fluorinated elastomer crosslinked article will be excellent in rubber physical properties such as flexibility, elongation, mechanical strength, etc., and the production will be easy.

Tg of the fluorinated elastomer is preferably from -50°C to 0°C, more preferably from -50°C to -5°C, further preferably from -40°C to -10°C, particularly preferably from - 40°C to -15°C. When Tg is within the above range, the fluorinated elastomer crosslinked article will be excellent in cold resistance and will also be suitable for use in a low-temperature environment. Tg of the fluorinated elastomer can be adjusted by the ratio of units (A) to units (B).

The fluorinated elastomer may contain one or more types of units (C) based on monomers other than VDF and PAVE.

The monomers other than VDF and PAVE may, for example, be tetrafluoroethylene (hereinafter referred to also as "TFE"), hexafluoropropylene, ethylene, etc. Among them, TFE is preferred, since it is thereby readily possible to obtain a fluorinated elastomer crosslinked article having a low fuel permeability coefficient and being excellent in fuel barrier properties. The fluorinated elastomer crosslinked article having a low fuel permeability coefficient is useful, for example, as a hose for automobile fuel or as a sealing material for automobile fuel.

In a case where the fluorinated elastomer contains units (C), the content of the units (C) is preferably from 1 to 50 mol%, more preferably from 3 to 40 mol%, particularly preferably from 5 to 30 mol%, to all units contained in the fluorinated elastomer. When the content of the units (C) is within the above range, the fluorinated elastomer crosslinked article will have a low fuel permeability coefficient and will be excellent in fuel barrier properties.

The fluorine content of the fluorinated elastomer is preferably at least 65 mass%, more preferably at least 66 mass%, particularly preferably at least 67 mass%. When the fluorine content is within the above range, the swelling properties to methanol can be kept to be low, and the barrier properties to alcohol-containing fuel will be excellent.

The fluorinated elastomer of the present invention has iodine atoms in main chain terminals. Iodine atoms (iodine groups) will act as crosslinking sites at the time of crosslinking the fluorinated elastomer composition. Iodine is preferred as compared to bromine, in that an environmental load at the time of e.g. combustion disposal is small.

As a method of introducing iodine atoms into main chain terminals of the fluorinated elastomer, a method may be mentioned wherein at the time of the production of the fluorinated elastomer, a chain transfer agent containing an iodine atom, may be added so that iodine atoms are introduced into the main chain terminals of the polymer by an iodine transfer polymerization.

• Like iodine atoms present in side chains of a fluorinated elastomer, iodine atoms present in main chain terminals will contribute to crosslinking. Therefore, the fluorinated elastomer having iodine atoms in main chain terminals has a high crosslinking efficiency and a high crosslinking rate. Further, as compared with the case where iodine atoms are present in side chains, if present in main chain terminals, a crosslinked structure to be formed, tends to be uniform. Therefore, the obtainable fluorinated elastomer crosslinked article will have crosslinking highly advanced to have a high crosslinked degree, and will be excellent in mechanical strength.

Further, according to the method of introducing iodine atoms into main chain terminals of a polymer by iodine transfer polymerization, the polymerization reaction proceeds in a living manner, whereby it is easy to control the molecular weight and molecular weight distribution of the obtainable fluorinated elastomer, and it is easy to obtain a fluorinated elastomer having a narrow molecular weight distribution. Further, it is possible to prevent formation of an oligomer which will adversely affect the processability and mechanical properties of the fluorinated elastomer.

As a method of introducing iodine atoms into side chains of the fluorinated elastomer, a method may be mentioned wherein at the time of the production of a fluorinated elastomer, co-polymerization is conducted by using a monomer having an iodine atom. The fluorinated elastomer of the present invention may have units based on a monomer having an iodine atom within a range of not more than 2 mol% to all units contained in the fluorinated elastomer, but preferably may not have such units. That is, it is preferred not to have an iodine atom in side chains.

A chain transfer agent containing iodine atoms may, for example, be a compound represented by I-Rf¹-I (wherein Rf¹ is a C₁₋₈ perfluoroalkylene group or a C₂₋₈ perfluoroalkylene group containing an etheric oxygen atom between carbon atoms), a compound represented by I-R¹-I (wherein R¹ is a C₁₋₈ alkylene group or a C₂₋₈ alkylene group containing an etheric oxygen atom between carbon atoms), etc.. Particularly, the former diiodo perfluoroalkane is preferred.

As the chain transfer agent containing iodine atoms, one type may be used alone, or two or more types may be used in combination.

Specific examples of the above I-Rf¹-I may be diiododifluoromethane, 1,3-diiodo perfluoropropane, 1,4-diiodo perfluorobutane, 1,5-diiodo perfluoropentane, 1,6-diiodo perfluorohexane, 1,7-diiodo perfluoroheptane, 1,8-diiodo perfluorooctane, etc. Among them, 1,4-diiodo perfluorobutane and 1,6-diiodo perfluorohexane are preferred, and 1,4-diiodo perfluorobutane is more preferred.

Specific examples of the above I-R¹-I may be 1,2-diiodoethane, 1,4-diiodobutane, 1,5-diiodopentane, 1,6-diiodohexane, etc.

The content of iodine atoms at main chain terminals in the fluorinated elastomer is preferably 0.001 to 1.5 mass%, more preferably from 0.01 to 1.0 mass%, particularly preferably from 0.01 to 0.5 mass%, to the fluorinated elastomer. Within the above range, crosslinking efficiency of the fluorinate elastomer will be high, and the obtainable fluorinated elastomer crosslinked article will be excellent in mechanical properties. Further, it will be excellent also in fuel barrier properties.

The storage elastic modulus G' of the fluorinated elastomer is preferably from 10 to 300 kPa, more preferably from 50 to 200 kPa. The storage elastic modulus G' is a measure of the molecular weight and composition. For example, if the composition is constant, as the storage elastic modulus G' is large, the molecular weight is large, and as the storage elastic modulus G' is small, the molecular weight is small. If the molecular weight is constant, as the storage elastic modulus G' is large, the content of units (A) is large, and as the storage elastic modulus G' is small, the content of units (A) is small.

When the storage elastic modulus G' of the fluorinated elastomer is within the above range, the fluorinated elastomer crosslinked article will be excellent in mechanical properties and can be used for various applications. For example, in a case where the fluorinated elastomer crosslinked article is a hose for automobile fuel or a sealing material for automobile fuel, the storage elastic modulus G' of the fluorinated elastomer to be used is preferably from 50 to 300 kPa, more preferably from 100 to 200 kPa, particularly preferably from 150 to 200 kPa.

The fluorinated elastomer of the present invention can be crosslinked by organic peroxide crosslinking using a radical reaction, radiation crosslinking, etc.

Among them, organic peroxide crosslinking is preferred, since the crosslinking rate is thereby high, and in view of the oil resistance, chemical resistance, etc. of the obtainable fluorinated elastomer crosslinked article. In the case of employing organic peroxide crosslinking, an organic peroxide is used as will be described in detail later.

In a case where radiation crosslinking is to be carried out by using ionizing radiation, an ionizing radiation such as electron beam, γ ray, etc. is used. As a crosslinking condition, from 50 to 700 gray is preferred, and from 80 to 400 gray is more preferred. The crosslinking temperature is preferably from 0 to 300°C, more preferably from 10 to 200°C. In this case, it is not necessary to use an organic peroxide.

### [Method for producing fluorinated elastomer]

The method for producing a fluorinated elastomer is not particularly limited, and may be a known method such as an emulsion polymerization method or a solution polymerization method. Particularly, an emulsion polymerization method is preferred, since it is excellent in adjustment of the molecular weight and copolymer composition, and in productivity.

In the emulsion polymerization method, a monomer mixture comprising VDF and PAVE is subjected to radical copolymerization in the presence of an aqueous medium, a radical polymerization initiator, an emulsifier, and a chain transfer agent containing iodine atoms.

As the emulsifier, a known one may suitably be used. For example, a hydrocarbon emulsifier such as sodium lauryl sulfate or sodium dodecylbenzene sulfonate; or a fluorinated emulsifier such as ammonium perfluorooctanoate, ammonium perfluorohexane acid, C₂F₅-O-C₂F₄-O-CF₂-COONH₄ or C₃F₇-O-CF(CF₃)-CF₂-O-CF(CF₃)-COONH₄, may be mentioned. Especially from the viewpoint of stability at the time of polymerization, a fluorinated emulsifier is preferred.

As the chain transfer agent, a chain transfer agent containing iodine atoms as exemplified above, may be used.

The amount of the chain transfer agent containing iodine atoms to be used, is influential over the content of iodine atoms in the obtainable fluorinated elastomer, the molecular weight and the molecular weight distribution, and therefore, is determined in consideration of these influences. For example, the amount of the chain transfer agent containing iodine atoms, is preferably in a range of from 0.1 to 0.5 parts by mass per 100 parts by mass of the aqueous medium.

At the time of the polymerization, together with a chain transfer agent containing iodine atoms, one or more chain transfer agents containing no iodine atom may be used in combination.

The chain transfer agents containing no iodine atom, may, for example, be chain or cyclic saturated hydrocarbons such as methane, ethane, propane, butane, pentane, hexane, cyclohexane, etc.; alcohols such as methanol, ethanol, propanol, etc.; mercaptans such as tert-dodecyl mercaptan, n-dodecyl mercaptan, n-octadecyl mercaptan, etc.; etc.

The amount of the chain transfer agent containing no iodine atom is determined in consideration of the molecular weight and molecular weight distribution of the obtainable fluorinated elastomer. In the case of using the chain transfer agent containing no iodine atom, its amount is preferably in a range of at most 10 parts by mass per 100 parts by mass of the aqueous medium.

Further, in a case where a chain transfer agent containing no iodine atom is used in combination, in the fluorinated elastomer of the present invention, molecules having no iodine atom at the terminals, will also be present, but they will also be regarded as part of the fluorinated elastomer of the present invention.

As the aqueous medium, water or a mixed solvent of water and a water-soluble organic solvent, is preferred.

The water-soluble organic solvent may, for example, be tert-butanol, propylene glycol, dipropylene glycol, dipropylene glycol monomethyl ether, tripropylene glycol, etc. Particularly, tert-butanol or dipropylene glycol monomethyl ether is preferred.

In the mixed solvent, the proportion of the water-soluble organic solvent is preferably from 1 to 40 parts by mass, more preferably from 3 to 30 parts by mass per 100 parts by mass of water.

It is preferred to mix a water-soluble organic solvent in water, since the molecular weight of the fluorinated polymer tends to readily rise, or the stability of the latex tends to increase.

As the radical polymerization initiator, a known radical polymerization initiator in the production of a fluorinated elastomer may suitably be used. It may be suitably selected depending on the polymerization method. For example, in a case where the reaction is carried out in an aqueous medium such as water, a water-soluble radical polymerization initiator is preferably used.

Specific examples of the water-soluble radical polymerization initiator may be persulfates such as ammonium persulfate, etc., inorganic initiators such as hydrogen peroxide, etc. and organic initiators such as disuccinic acid peroxide, azobisisobutylamidine dihydrochloride, etc.

Further, a redox initiator consisting of a combination of a persulfate compound or hydrogen peroxide, with a reducing agent such as sodium bisulfite or sodium thiosulfate, or an inorganic initiator having a small amount of iron, a ferrous salt, silver sulfate, etc. incorporated into the redox initiator, may also be used.

### [Fluorinated elastomer composition]

The fluorinated elastomer of the present invention as described above, is crosslinkable by itself, but it is preferred to carry out crosslinking by organic peroxide crosslinking by using an organic peroxide in combination.

The fluorinated elastomer composition of the present invention is characterized by comprising the fluorinated elastomer of the present invention and an organic peroxide, wherein the content of the organic peroxide is from 0.05 to 10 parts by mass per 100 parts by mass of the fluorinated elastomer.

When the fluorinated elastomer composition contains an organic peroxide and the content thereof is within the above range, the fuel barrier properties and rubber properties of the obtainable fluorinated elastomer crosslinked article will be excellent.

Further, it is preferred that the fluorinated elastomer composition of the present invention further contains a crosslinking assistant, and the content of the crosslinking assistant is preferably from 0.1 to 10 parts by mass per 100 parts by mass of the fluorinated elastomer.

When the fluorinated elastomer composition further contains a crosslinking assistant, and its content is within the above range, the fuel barrier properties of the obtainable fluorinated elastomer crosslinked article will be more excellent. Further, the balance of tensile strength and elongation of the obtainable fluorinated elastomer crosslinked article will be good.

The fluorinated elastomer composition of the present invention will be readily crosslinked by heating.

### (Organic peroxide)

The organic peroxide is not particularly limited, and one having one-minute half-life temperature i.e. a temperature at which one half amount of the organic peroxide is decomposed in one minute, being from 100 to 250°C, is preferred, and one having such a temperature being from150 to 200°C is more preferred.

As the organic peroxide, one type may be used alone, or two or more types may be used in combination.

Specific examples of the organic peroxide may, for example, be dialkyl peroxides such as di-tert-butyl peroxide, tert-butyl cumyl peroxide, dicumyl peroxide, α,α-bis(tert-butylperoxy)-p-diisopropylbenzene, 2,5-dimethyl-2,5-di(tert-butylperoxy)hexane, 2,5-dimethyl-2,5-di(tert-butylperoxy)hexane-3, 1,3-bis(tert-butylperoxy-isopropyl)benzene, etc.; 1,1-di(tert-butylperoxy)-3,3,5-trimethylcyclohexane, 2,5-dimethylhexane-2,5-dihydroxy peroxide, benzoyl peroxide, tert-butylperoxy benzene, 2,5-dimethyl-2,5-di(benzoyl peroxy)hexane, tert-butylperoxy maleic acid, tert-butyl peroxy isopropyl carbonate, etc. As the organic peroxide, one type may be used alone, or two or more types may be used in combination.

The content of the organic peroxide per 100 parts by mass of the fluorinated elastomer is preferably from 0.2 to 5 parts by mass, more preferably from 0.5 to 3 parts by mass. Within the above range, the fuel barrier properties and rubber properties of the obtainable fluorinated elastomer crosslinked article will be further excellent.

### (Crosslinking assistant)

As specific examples of the crosslinking assistant, triallyl cyanurate (hereinafter referred to also as "TAC"), triallyl isocyanurate (hereinafter referred to also as "TAIC"), trimethallyl isocyanurate (hereinafter referred to also as "TMAC"), 1,3,5-triacryloylhexahydro-1,3,5-triazine, triallyl trimellitate, m-phenylenediamine bismaleimide, p-quinone dioxime, p,p'-dibenzoyl quinone dioxime, dipropargyl terephthalate, diallyl phthalate, N,N',N",N"'-tetraallyl terephthalamide, a vinyl group-containing siloxane oligomer such as polymethyl vinyl siloxane or polymethyl phenyl vinyl siloxane, etc. may be mentioned.

Particularly, TAC, TAIC or TMAC is preferred, and TAIC is more preferred.

As the crosslinking assistant, one type may be used alone, or two or more types may be used in combination.

The content of the crosslinking assistant per 100 parts by mass of the fluorinated elastomer, is preferably from 0.5 to 5 parts by mass. Within the above range, the fuel barrier properties of the obtainable fluorinated elastomer crosslinked article will be more excellent. Further, the balance of tensile strength and elongation of the fluorinated elastomer crosslinked article will also be more improved.

### (Other additives)

The fluorinated elastomer composition may contain other additives in addition to the organic peroxide and crosslinking assistant, as the case requires. As such other additives, a scorch retarder, a metal oxide, a pigment, a filler, a reinforcing material, a processing aid, etc. may be mentioned.

### <Scorch retarder>

The scorch retarder may, for example, be a phenolic hydroxyl-containing compound such as bisphenol A, bisphenol AF, phenol, cresol, p-phenylphenol, m-phenylphenol, o-phenylphenol, allyl phenol, p-hydroxybenzoic acid, or ethyl p-hydroxybenzoate; a quinone such as hydroquinone, hydroquinone monoethyl ether or hydroquinone monomethyl ether; an α-methylstyrene dimer such as 2,4-di(3-isopropylphenyl)-4-methyl-1-pentene, 2,4.-di(4-isopropylphenyl)-4-methyl-1-pentene, 2-(3-isopropylphenyl)-4-(4-isopropylphenyl)-4-methyl-1-pentene, 2-(4-isopropylphenyl)-4-(3=isopropylphenyl)-4-methyl-1-pentene, 2,4-di(3-methylphenyl)-4-methyl-1-pentene, 2,4-di(4-methylphenyl)-4-methyl-1-pentene or 2,4-diphenyl-4-methyl-1-pentene; etc.

Among them, a phenolic hydroxyl-containing compound or a α-methylstyrene dimer is preferred, o-phenylphenol or 2,4-diphenyl-4-methyl-1-pentene is more preferred, and o-phenylphenol is particularly preferred.

In a case where the fluorinated elastomer composition contains a scorch retarder, the content thereof is preferably from 0.05 to 3 parts by mass, more preferably from 0.05 to 1 part by mass, per 100 parts by mass of the fluorinated elastomer.

### <Metal oxide>

As the metal oxide, a divalent metal oxide such as magnesium oxide, calcium oxide, zinc oxide or lead oxide is preferred.

In a case where the fluorinated elastomer composition contains a metal oxide, the content thereof is preferably from 0.1 to 10 parts by mass, more preferably from 0.5 to 5 parts by mass, per 100 parts by mass of the fluorinated elastomer.

### <Pigment>

As the pigment, an inorganic pigment or an organic pigment may be mentioned. The inorganic pigment may, for example, be titanium dioxide, zinc oxide, ultramarine, red iron oxide, lithopone, lead, cadmium, iron, cobalt, aluminum, a hydrochloride, a sulfate, etc.

The organic pigment may, for example, be an azo pigment, a copper phthalocyanine pigment, etc.

In a case where the fluorinated elastomer composition contains a pigment, the content thereof is preferably from 0.1 to 50 parts by mass per 100 parts by mass of the fluorinated elastomer.

### <Filler>

As the filler, an inorganic filler or organic filler having various shapes, may be mentioned.

The inorganic filler may, for example, be fumed silica, calcined silica, precipitated silica, ground silica, fused silica, diatomaceous earth, iron oxide, zinc oxide, titanium oxide, barium oxide, magnesium oxide, calcium carbonate, calcium bicarbonate, magnesium carbonate, zinc carbonate, magnesium hydroxide, carbon black, etc. These inorganic substances may be surface-treated products such as fatty acid-treated products and fatty acid ester-treated products.

The organic filler may, for example, be particles of a styrene resin, or particles of an acrylic resin.

In a case where the fluorinated elastomer composition contains a filler, the content thereof is preferably from 1 to 100 parts by mass per 100 parts by mass of the fluorinated elastomer.

### <Reinforcing material>

As the reinforcing material, fumed silica, precipitated silica, silicic anhydride, hydrous silicic acid, carbon black, surface treated fine calcium carbonate, calcined clay, clay, activated zinc white, etc. may be mentioned.

In a case where the fluorinated elastomer composition contains a reinforcing material, the content thereof is preferably from 1 to 100 parts by mass per 100 parts by mass of the fluorinated elastomer.

### <Processing aid>

As the processing aid, sodium stearate, zinc stearate, etc. may be mentioned.

In a case where the fluorinated elastomer composition contains a processing aid, its content is preferably from 0.01 to 10 parts by mass, more preferably from 0.1 to 5 parts by mass, per 100 parts by mass of the fluorinated elastomer.

### [Method for producing fluorinated elastomer composition]

The fluorinated elastomer composition of the present invention is preferably produced by kneading the fluorinated elastomer and an organic peroxide, and additives to be added as the case requires.

As the kneader, a two-roll mill, a kneader, a Banbury mixer or the like may be used.

In a case where heat generation at the time of kneading is severe, it is preferred to cool the kneader. The kneading temperature is preferably at most 60°C, more preferably at most 50°C. Whereas, the lower limit value of the kneading temperature is not particularly limited, but it is usually at least 20°C.

### [Fluorinated elastomer crosslinked article]

The fluorinated elastomer crosslinked article of the present invention is obtainable by molding and crosslinking the fluorinated elastomer composition of the present invention.

Molding and crosslinking may be carried out simultaneously, or molding may be followed by crosslinking. The molding method is not particularly limited, and various molding methods such compression molding, extrusion molding, injection molding, etc. may be mentioned.

As the crosslinking method, there is a method of using heat or ionizing radiation, but as the fluorinated elastomer composition of the present invention contains an organic peroxide, it is preferably crosslinked by using heat (thermal crosslinking).

The crosslinking temperature in the case of thermal crosslinking using an organic peroxide is preferably from 100 to 300°C, more preferably from 150 to 250°C. Within the above range, the fluorinated elastomer crosslinked article will be excellent in the fuel barrier properties and rubber properties.

It is also preferred to carry out crosslinking by a combination of a primary crosslinking reaction at a relatively low temperature and a secondary crosslinking reaction at a relatively elevated temperature. The primary crosslinking reaction temperature is usually preferably from 150 to 200°C. The secondary crosslinking reaction temperature is usually preferably from 200 to 300°C, more preferably from 220 to 290°C, particularly preferably from 230 to 280°C. The crosslinking time may be suitably selected.

As a specific example of the combination of a primary crosslinking reaction and a secondary crosslinking reaction, it is, for example, preferred to carried out the primary crosslinking by hot press of from 150 to 200°C for from 3 to 60 minutes and to carry out the secondary crosslinking in an oven of from 200 to 300°C for from 1 to 24 hours.

In the case of crosslinking using ionizing radiation, the crosslinking is carried out by using ionizing radiation, such as electron beam, γ-ray, etc. As a crosslinking condition, from 50 to 700 gray is preferred, and from 80 to 400 gray is more preferred. The crosslinking temperature is preferably from 0 to 300°C, more preferably from 10 to 200°C.

The fluorinated elastomer crosslinked article of the present invention is one obtained by crosslinking and molding the fluorinated elastomer composition of the present invention. Therefore, it is considered to be excellent in mechanical strength based on entanglement of side chains of the fluorinated elastomer due to the branched structure of the side chains, a uniform crosslinked structure, etc. Further, it is excellent in cold resistance based on that the fluorinated elastomer of the present invention contains specific units at a specific ratio.

The fluorinated elastomer crosslinked article of the present invention can be used for various applications, but in particular, the following applications are preferred.

In the automotive field, etc., a sliding member to be used at a site at which sliding is conducted in contact with another material (particularly a sealing material for automobile fuel), or a hose for automotive fuel for supplying an automobile fuel, is preferred.

As a sealing material for automobile fuel, a gasket to be used for an engine and its peripheral devices (i.e. a gasket such as an engine head gasket, a metal gasket, an oil pan gasket, an universal joint gasket, etc.), various types of sealing material (various sealing materials for AT equipment, sealing materials for a fuel system and peripheral equipment, etc.) may be mentioned.

As specific examples, a piston ring, an O (corner) ring, a packing, a diaphragm, a crank shaft seal, a cam shaft seal, a valve stem seal, a manifold packing, an oxygen sensor seal, an injector O-ring, an injector packing, a fuel pump O-ring, a gear box seal, a power piston packing, a cylinder liner seal, a front pump seal of an automatic transmission, a rear axle pinion seal, a pinion seal for a speedometer, a piston cup for a foot brake, an O-ring for torque transmission, an oil seal, a seal for an exhaust gas re-combustion device, a bearing seal, a diaphragm for a sensor of a carburetor, etc. may be mentioned.

### EXAMPLES

Now, the present invention will be described in detail with reference to Examples and Comparative Examples, but the present invention is not limited to these Examples.

For various measurements, the following methods were used.

### [Fluorinated elastomer (uncrosslinked state)]

### (Content of iodine atoms in fluorinated elastomer)

The content of iodine atoms as crosslinking sites in a fluorinated elastomer, was measured by a fluorescent X-ray elemental analysis.

### (Copolymerization composition of fluorinated elastomer)

A fluorinated elastomer was dissolved in tetrahydrofuran, and ¹⁹F-NMR was measured, whereupon the copolymerization composition was calculated.

### (Tg (°C) of fluorinated elastomer)

Using a thermal analysis apparatus (TMA6100, manufactured by Seiko Instruments Inc.), the thermal expansion coefficient of a fluorinated elastomer composition was measured under conditions of a temperature raising rate of 1°C/min. and a load of 5g (= 0.049N). An inflection point of the thermal expansion coefficient was taken as Tg (°C).

### (Storage elastic modulus G' of fluorinated elastomer)

Using RPA2000 manufactured by Alpha Technologies Inc., a value measured in accordance with ASTM D5289 and D6204, at a temperature of 100°C at an amplitude of 0.5 degree and at a frequency of 50 times/min., was taken as the storage elastic modulus.

### [Fluorinated elastomer crosslinked article]

### (Production of fluorinated elastomer crosslinked article)

100 parts by mass of a fluorinated elastomer, 1.8 parts by mass of a crosslinking assistant, 1.25 parts by mass of an organic peroxide, 50 parts by mass of a filler and 5 parts by mass of a processing aid were kneaded by a twin roll mill to obtain a fluorinated elastomer composition.

The fluorinated elastomer composition was heat-pressed at 160°C under a pressure of from 9.8 to 14.7 MPa for 20 minutes for primary crosslinking. Then, it was subjected to secondary crosslinking in a heating oven at 250°C for 4 hours to obtain a sheet-form fluorinated elastomer crosslinked article having a thickness of 0.8 mm.

Various reagents used here are as follows.
Filler: carbon black. "MT- carbon (product name)", manufactured by CANCARB Co.
Crosslinking assistant: TAIC, manufactured by Nippon Kasei Chemical Co., Ltd.
Organic peroxide: 2,5-dimethyl-2,5-di(t-butylperoxy)-hexane. "Perhexa 25B (product name)", manufactured by NOF Corp. One minute-half-life temperature: 180°C.
Processing aid: sodium stearate. "Nonsoul SN-1 (product name)", manufactured by NOF Corp.

### (Rubber properties of fluorinated elastomer crosslinked article)

(1) Hardness (Shore-A): Measured by a durometer type A hardness test at 23°C in accordance with JIS K6253 (2012).
(2) Specific gravity: Measured by a method in accordance with JIS K6268 (A method).
(3) Tensile strength (unit: MPa): Measured at 23°C in accordance with JIS K6251 (2010).
(4) 100% modulus (unit: MPa): Measured at 23°C in accordance with JIS K6251 (2010).
(5) Elongation (unit:%): The elongation at break was measured at 23°C in accordance with JIS K6251 (2010).

### (Fuel barrier properties of fluorinated elastomer crosslinked article)

Using the sheet-form fluorinated elastomer crosslinked article having a thickness of 0.8 mm obtained as described above, the fuel permeability coefficient at room temperature (23°C) was measured by a cup method based on JIS Z0208 (established in 1976).

Specifically, the fuel permeability coefficient (unit: gram-millimeters/square meter 24 hours, hereinafter referred to simply as "g·mm/m²·24hr") to a mixed fuel of isooctane:toluene:ethanol in a mixing ratio (mass ratio) of 45:45:10 (hereinafter referred to as "CE10"), and the fuel permeability coefficient (g·mm/m²·24hr) to a mixed fuel of isooctane:toluene:methanol in a mixing ratio (mass ratio) of 42.5:42.5:15 (hereinafter referred to as "CM15"), were measured. The lower the fuel permeability coefficient, the better the fuel barrier properties.

### [Example 1]

To a stainless steel autoclave having an internal capacity of 2.3L, equipped with a stirrer and sufficiently deaerated, 761 g of ion-exchanged water, 54g of t-butanol, 10.47g of ammonium persulfate, 21.8 g of disodium hydrogen phosphate 12-hydrate, 145g of F(CF₂)₂OCF₂CF₂OCF₂COONH₄ (hereinafter referred to as "APDFO") and 2.39g of NaOH were added, and then, an aqueous solution containing 0.163g of ferrous sulfate heptahydrate and 0.196g of ethylene diamine tetra-acetic acid disodium salt dihydrate (hereinafter referred to as "EDTA") was added. Further, one having 3g of 1,4-diiodoperfluorobutane (I-(CF₂)₄-I, hereinafter referred to as "DIPFB") dissolved in 406g of PHVE, was charged, followed by stirring by setting the rotational speed to be 250 rpm.

The autoclave was set to be 25°C, and 191g of VDF was added. Then, the rotational speed was set to be 180 rpm, and when the pressure was stabilized, a 5 mass% aqueous solution of sodium hydroxymethanesulfinate dihydrate (hereinafter referred to as "HMSNa aqueous solution") was gradually injected to initiate a polymerization reaction. Since the pressure in the system decreased along with the progress of the reaction, VDF was injected for compensation to maintain the pressure at 2.4 MPa. Supply of a hydroxy methane sulfinic acid aqueous solution was continued, and when the supply amount of VDF reached 80 g (3 hours after the start of the reaction), the autoclave was cooled, and unreacted monomers were purged to stop the reaction.

The obtained latex (solid content: 29 mass%) was agglomerated with calcium chloride. The solid content was washed and dried to obtain 430g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 1.

Further, the fuel permeability coefficient to CE10 of the fluorinated elastomer crosslinked article was 3.0 g·mm/m²·24hr, and the fuel permeability coefficient to CM15 was 6.4 g·mm/m²·24hr.

### [Example 2]

An aqueous solution containing 0.163g of ferrous sulfate heptahydrate and 0.196g of and EDTA, was added to an aqueous solution comprising 761 g of ion-exchanged water, 54g of t-butanol, 10.47g of ammonium persulfate, 21.8g of disodium hydrogen phosphate dodecahydrate, 145g of APDFO and 2.39g of NaOH, and the mixture was put into a sufficiently deaerated stainless steel autoclave having an internal capacity of 2.3L.

Further, one having 3g of DIPFB dissolved in 406g of PHVE was charged and stirred by setting the rotational speed to be 250 rpm. The autoclave was set to be 25°C, and 187g of VDF was added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, VDF was injected to compensate the reduction of pressure and supply of a HMSNa aqueous solution was continued while maintaining the pressure at 2.3 MPa, and at the time when the amount of VDF reached 80g (3 hours after the start of the reaction), the autoclave was cooled, and unreacted monomers were purged to stop the reaction.

The obtained latex (solid content: 28 mass%) was aggregated with calcium chloride. The solid content was washed and dried to obtain 420g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 1.

Further, the fuel permeability coefficient to CE10 of the fluorinated elastomer crosslinked article was 3.3 g·mm/m²·24hr, and the fuel permeability coefficient to CM15 was 6.8 g·mm/m²·24hr.

### [Example 3]

An aqueous solution containing 0.163g of ferrous sulfate heptahydrate and 0.196g of and EDTA, was added to an aqueous solution comprising 761 g of ion-exchanged water, 54g of t-butanol, 10.47g of ammonium persulfate, 21.8g of disodium hydrogen phosphate dodecahydrate, 145g of APDFO and 2.39g of NaOH, and the mixture was put into a sufficiently deaerated stainless steel autoclave having an internal capacity of 2.3L. Further, one having 3g of DIPFB dissolved in 406g of PHVE was charged and stirred by setting the rotational speed to be 250 rpm. The autoclave was set to be 25°C, and 181g of VDF was added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, VDF was injected to compensate the reduction of pressure, and supply of a HMSNa aqueous solution was continued while maintaining the pressure to be 2.3 MPa, and when the amount of VDF reached 80g (3 hours after the start of the reaction), the autoclave was cooled, and unreacted monomers were purged to stop the reaction.

The obtained latex (solid content: 29 mass%) was agglomerated with calcium chloride. The solid content was washed and dried to obtain 431g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 1.

### [Example 4]

An aqueous solution containing 0.163g of ferrous sulfate heptahydrate and 0.196g of and EDTA, was added to an aqueous solution comprising 761 g of ion-exchanged water, 54g of t-butanol, 10.47g of ammonium persulfate, 21.8g of disodium hydrogen phosphate dodecahydrate, 145g of APDFO and 2.39g of NaOH, and the mixture was put into a sufficiently deaerated stainless steel autoclave having an internal capacity of 2.3L. Further, one having 2g of DIPFB dissolved in 406g of PHVE was charged and stirred by setting the rotational speed to be 250 rpm. The autoclave was set to be 25°C, and 187g of VDF was added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, VDF was injected to compensate the reduction of pressure, and supply of a HMSNa aqueous solution was continued while maintaining the pressure to be 2.2 MPa, and when the amount of VDF reached 80g (3 hours after the start of the reaction), the autoclave was cooled, and unreacted monomers were purged to stop the reaction. The obtained latex (solid content: 26 mass%) was aggregated with calcium chloride. The solid content was washed and dried to obtain 388g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 1.

### [Example 5]

An aqueous solution containing 0.163g of ferrous sulfate heptahydrate and 0.196g of and EDTA, was added to an aqueous solution comprising 761 g of ion-exchanged water, 54g of t-butanol, 10.47g of ammonium persulfate, 21.8g of disodium hydrogen phosphate dodecahydrate, 145g of APDFO and 2.39g of NaOH, and the mixture was put into a sufficiently deaerated stainless steel autoclave having an internal capacity of 2.3L. Further, one having 1g of DIPFB dissolved in 406g of PHVE was charged and stirred by setting the rotational speed to be 250 rpm. The autoclave was set to be 25°C, and 187g of VDF was added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, VDF was injected to compensate the reduction of pressure, and supply of a HMSNa aqueous solution was continued while maintaining the pressure to be 2.2 MPa, and when the amount of VDF reached 80g (3 hours after the start of the reaction), the autoclave was cooled, and unreacted monomers were purged to stop the reaction. The obtained latex (solid content: 28 mass%) was aggregated with calcium chloride. The solid content was washed and dried to obtain 390g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 1.

**Table 1**

| | | Ex. 1 | Ex. 2 | Ex. 3 | Ex. 4 | Ex. 5 |
|---|---|---|---|---|---|---|
| Fluorinated elastomer | VDF units/PHVE units (molar ratio) | 84/16 | 83/17 | 81/19 | 83/17 | 83/17 |
| | Tg(°C) | -33 | -33 | -34 | -33 | -33 |
| | Content of iodine atoms (mass%) | 0.027 | 0.026 | 0.024 | 0.022 | 0.014 |
| | G' (kPa) | 134 | 77 | 18 | 61 | 174 |
| Fluorinated elastomer crosslinked article | Specific gravity | 1.85 | 1.86 | 1.86 | 1.86 | 1.86 |
| | Tensile strength (MPa) | 15.3 | 15.0 | 14.0 | 14.0 | 13.9 |
| | Elongation (%) | 215 | 198 | 206 | 208 | 229 |
| | 100% modulus (MPa) | 7.3 | 7.5 | 5.3 | 5.8 | 6.5 |
| | Hardness (Shore-A) | 84.3 | 83.3 | 74.9 | 77.6 | 77.7 |

### [Example 6]

An aqueous solution containing 0.163g of ferrous sulfate heptahydrate and 0.196g of and EDTA, was added to an aqueous solution comprising 761 g of ion-exchanged water, 54g of t-butanol, 10.87g of ammonium persulfate, 21.8g of disodium hydrogen phosphate dodecahydrate, 145g of a 30% APDFO aqueous solution and 2.39g of NaOH, and the mixture was put into a sufficiently deaerated stainless steel autoclave having an internal capacity of 2.3L. Further, one having 1.036g of CF₂=CFO(CF₂)₃OCF=CF₂ and 1g of DIPFB dissolved in 406g of PHVE was charged and stirred by setting the rotational speed to be 250 rpm. The autoclave was set to be 25°C, and 125g of VDF and 49 g of tetrafluoroethylene (hereinafter referred to as TFE) were added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, a gas (CG gas) having VDF/TFE mixed in a ratio of 75/25 (molar ratio) was injected to compensate the reduction of pressure, and supply of a HMSNa aqueous solution was continued while maintaining the pressure to be 2.0 MPa, and when the amount of the CG gas reached 90g (4.8 hours after the start of the reaction), the autoclave was cooled, and unreacted monomers were purged to stop the reaction. The obtained latex (solid content: 22 mass%) was aggregated with calcium chloride. The solid content was washed and dried to obtain 313g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 2.

### [Example 7]

An aqueous solution containing 0.163g of ferrous sulfate heptahydrate and 0.196g of and EDTA, was added to an aqueous solution comprising 761 g of ion-exchanged water, 54g of t-butanol, 10.87g of ammonium persulfate, 21.8g of disodium hydrogen phosphate dodecahydrate, 145g of a 30% APDFO aqueous solution and 2.39g of NaOH, and the mixture was put into a sufficiently deaerated stainless steel autoclave having an internal capacity of 2.3L. Further, one having 1g of DIPFB dissolved in 406g of PHVE was charged and stirred by setting the rotational speed to be 250 rpm. The autoclave was set to be 25°C, and 109g of VDF and 73 g of TFE were added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, a gas (CG gas) having VDF/TFE mixed in a ratio of 75/25 (molar ratio) was injected to compensate the reduction of pressure, and supply of a HMSNa aqueous solution was continued while maintaining the pressure to be 1.9 MPa, and when the amount of the CG gas reached 90g (0.5 hour after the start of the reaction), the autoclave was cooled, and unreacted monomers were purged to stop the reaction. The obtained latex (solid content: 24 mass%) was aggregated with calcium chloride. The solid content was washed and dried to obtain 322g of a white sponge-like fluorinated elastomer.

Using the obtained fluorinated elastomer, a fluorinated elastomer crosslinked article was obtained as described above.

The characteristics of the fluorinated elastomer and the fluorinated elastomer crosslinked article are shown in Table 2.

**Table 2**

| | | Ex. 6 | Ex. 7 |
|---|---|---|---|
| Fluorinated elastomer | VDF units/PHVE units (molar ratio) | 67/14/19 | 62/26/12 |
| | Tg (°C) | -34 | -34 |
| | Content of iodine atoms (mass%) | 0.02 | 0.02 |
| | G' (kPa) | 160 | 167 |
| Fluorinated elastomer crosslinked article | Specific gravity | 1.9 | 1.89 |
| | Tensile strength (MPa) | 16.8 | 18.2 |
| | Elongation (%) | 197 | 236 |
| | 100% modulus (MPa) | 7 | 9.2 |
| | Hardness (Shore-A) | 74.2 | 87.4 |

### [Example 8]

An aqueous solution containing 0.163g of ferrous sulfate heptahydrate and 0.196g of and EDTA, was added to an aqueous solution comprising 761g of ion-exchanged water, 54g of t-butanol, 10.87g of ammonium persulfate, 21.8g of disodium hydrogen phosphate dodecahydrate, 145g of a 30% APDFO aqueous solution and 2.39g of NaOH, and the mixture was put into a sufficiently deaerated stainless steel autoclave having an internal capacity of 2.3L. Further, one having 1g of DIPFB dissolved in 406g of PHVE was charged and stirred by setting the rotational speed to be 250 rpm. The autoclave was set to be 25°C, and 172g of VDF and 57 g of TFE were added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, a gas (CG gas) having VDF/TFE mixed in a ratio of 75/25 (molar ratio) was injected to compensate the reduction of pressure, and supply of a HMSNa aqueous solution was continued while maintaining the pressure to be 2.6 MPa, and when the amount of the CG gas reached 90g (4.2 hours after the start of the reaction), the autoclave was cooled, and unreacted monomers were purged to stop the reaction. The obtained latex (solid content: 23 mass%) was aggregated with calcium chloride. The solid content was washed and dried to obtain 315g of a white sponge-like fluorinated elastomer.

The obtained fluorinated elastomer had a copolymer composition of VDF units/TFE units/PHVE units (molar ratio) = 71/13/16, and a glass transition temperature of -40°C, and the content of iodine atoms was 0.02 mass%.

### [Example 9]

An aqueous solution containing 0.163g of ferrous sulfate heptahydrate and 0.196g of and EDTA, was added to an aqueous solution comprising 761 g of ion-exchanged water, 54g of t-butanol, 10.87g of ammonium persulfate, 21.8g of disodium hydrogen phosphate dodecahydrate, 145g of a 30% APDFO aqueous solution and 2.39g of NaOH, and the mixture was put into a sufficiently deaerated stainless steel autoclave having an internal capacity of 2.3L. Further, one having 1 g of DIPFB dissolved in 406g of PHVE was charged and stirred by setting the rotational speed to be 250 rpm. The autoclave was set to be 25°C, and 127g of VDF and 127 g of TFE were added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, a gas (CG gas) having VDF/TFE mixed in a ratio of 75/25 (molar ratio) was injected to compensate the reduction of pressure, and supply of a HMSNa aqueous solution was continued while maintaining the pressure to be 2.6 MPa, and when the amount of the CG gas reached 90g (4.0 hours after the start of the reaction), the autoclave was cooled, and unreacted monomers were purged to stop the reaction. The obtained latex (solid content: 24 mass%) was aggregated with calcium chloride. The solid content was washed and dried to obtain 320g of a white sponge-like fluorinated elastomer.

The obtained fluorinated elastomer had a copolymer composition of VDF units/TFE units/PHVE units (molar ratio) = 50/34/16, and a glass transition temperature of -26°C, and the content of iodine atoms was 0.02 mass%.

### [Example 10]

An aqueous solution containing 0.163g of ferrous sulfate heptahydrate and 0.196g of and EDTA, was added to an aqueous solution comprising 761 g of ion-exchanged water, 54g of t-butanol, 10.87g of ammonium persulfate, 21.8g of disodium hydrogen phosphate dodecahydrate, 145g of a 30% APDFO aqueous solution and 2.39g of NaOH, and the mixture was put into a sufficiently deaerated stainless steel autoclave having an internal capacity of 2.3L. Further, one having 1g of DIPFB dissolved in 406g of PHVE was charged and stirred by setting the rotational speed to be 250 rpm. The autoclave was set to be 25°C, and 146g of VDF and 98 g of TFE were added. Then, by setting the rotational speed to be 180 rpm, stability of pressure was waited. When the pressure was stabilized, a HMSNa aqueous solution was gradually injected to initiate a polymerization reaction. As the pressure inside of the system was reduced along with the progress of the reaction, a gas (CG gas) having VDF/TFE mixed in a ratio of 75/25 (molar ratio) was injected to compensate the reduction of pressure, and supply of a HMSNa aqueous solution was continued while maintaining the pressure to be 2.6 MPa, and when the amount of the CG gas reached 90g (4.5 hours after the start of the reaction), the autoclave was cooled, and unreacted monomers were purged to stop the reaction. The obtained latex (solid content: 22 mass%) was aggregated with calcium chloride. The solid content was washed and dried to obtain 304g of a white sponge-like fluorinated elastomer.

The obtained fluorinated elastomer had a copolymer composition of VDF units/TFE units/PHVE units (molar ratio) = 59/25/16, and a glass transition temperature of -31°C, and the content of iodine atoms was 0.02 mass%.

### (Consideration)

(1) The fluorinated elastomer in each Example had a low Tg, and it was thus shown that a fluorinated elastomer crosslinked article having excellent cold resistance would be obtainable. Further, the fluorinated elastomer crosslinked article in each Example was excellent in tensile strength and other mechanical properties. Therefore, according to each Example, it has been shown that it is possible to produce a fluorinated elastomer crosslinked article excellent in cold resistance and excellent in mechanical strength.
(2) The fluorinated elastomer in each Example was found that the storage elastic modulus G' could be controlled in a wide range by adjusting the molar ratio of units (A) to (C), by adjustment of the molecular weight by changing the amount of the chain transfer agent, and that it is useful for various applications.
(3) The fluorinated elastomer crosslinked articles in Examples 1 and 2 were excellent in fuel barrier properties, and thus were found that they are useful also as a hose for automobile fuel or a sealing material for automobile fuel.

### INDUSTRIAL APPLICABILITY

The fluorinated elastomer crosslinked article of the present invention is useful in the automotive field, etc., as a sliding member (especially as a sealing material for automobile fuel) to be used at a site to perform sliding in contact with another material, or as a hose for automobile fuel to supply automobile fuel.

The entire disclosure of Japanese Patent Application No. 2014-226976 filed on November 7, 2014 including specification, claims, drawings and summary is incorporated herein by reference in its entirety.

## Claims

1. A fluorinated elastomer **characterized by** comprising units (A) based on vinylidene fluoride and units (B) based on a perfluorovinyl ether represented by the following formula (1) and having iodine atoms at main chain terminals, wherein the molar ratio [(A)/(B)] of the units (A) to the units (B) is from 88/12 to 50/50,
CF₂=CF-O-R^{f} (1)
wherein R^{f} is a C₁₋₂₀ perfluoroalkyl group having a branched structure, or a C₂₋₂₀ perfluoroalkyl group having a branched structure and having an etheric oxygen atom between carbon atoms.

2. The fluorinated elastomer according to Claim 1, which further contains units (C) based on a monomer other than the above vinylidene fluoride and the above perfluorovinyl ether.

3. The fluorinated elastomer according to Claim 2, wherein the content of the units (C) is from 1 to 50 mol% to all units.

4. The fluorinated elastomer according to Claim 2 or 3, wherein the units (C) are units based on tetrafluoroethylene.

5. The fluorinated elastomer according to any one of Claims 1 to 4, wherein the perfluorovinyl ether is perfluoro(2-n-propoxy-propyl vinyl ether).

6. The fluorinated elastomer according to any one of Claims 1 to 5, wherein the fluorine content in the fluorinated elastomer is at least 65 mass%.

7. The fluorinated elastomer according to any one of Claims 1 to 6, wherein the content of iodine atoms at the main chain terminals is from 0.001 to 1.5 mass% to the fluorinated elastomer.

8. The fluorinated elastomer according to any one of Claims 1 to 7, wherein the glass transition temperature of the fluorinated elastomer is from -50 to 0°C.

9. The fluorinated elastomer according to any one of Claims 1 to 8, wherein the storage elastic modulus of the fluorinated elastomer is from 10 to 300 kPa.

10. A fluorinated elastomer composition **characterized by** comprising the fluorinated elastomer as defined in any one of Claims 1 to 9 and an organic peroxide, wherein the content of the organic peroxide is from 0.05 to 10 parts by mass per 100 parts by mass of the fluorinated elastomer.

11. The fluorinated elastomer composition according to Claim 10, which further contains a crosslinking assistant, wherein the content of the crosslinking assistant is from 0.1 to 10 parts by mass per 100 parts by mass of the fluorinated elastomer.

12. A fluorinated elastomer crosslinked article formed by molding and crosslinking the fluorinated elastomer composition as defined in Claim 10 or 11.

13. The fluorinated elastomer crosslinked article according to Claim 12, which is a hose for automobile fuel or a sealing material for automobile fuel.
